# EUROPÄISCHE PATENTSCHRIFT

(11) **EP 3 925 039 B1**
(45) Veröffentlichungstag und Bekanntmachung des Hinweises auf die Patenterteilung: **03.04.2024**
(21) Anmeldenummer: 20703019.8
(22) Anmeldetag: 31.01.2020
(51) Int. Cl.: H02B 1/056, H02J 13/00

(54) **VERFAHREN ZUM BETRIEB EINES STROMVERTEILERS**
METHOD OF OPERATING A CURRENT DISTRIBUTOR
MÉTHODE D'EXPLOITATION D'UN DISTRIBUTEUR DE COURANT

(30) Priorität: 15.03.2019 DE 102019203521
(43) Veröffentlichungstag der Anmeldung: 22.12.2021
(73) Patentinhaber: Ellenberger & Poensgen GmbH, 90518 Altdorf (DE)
(72) Erfinder: VON DER LIECK, Guido, 90491 Nürnberg (DE)
(74) Vertreter: FDST Patentanwälte
(86) Internationale Anmeldenummer: PCT/EP2020/052405
(87) Internationale Veröffentlichungsnummer: WO 2020/187477

(56) Entgegenhaltungen:
- EP-A1- 0 806 751
- WO-A1-2015/062731
- WO-A1-2017/076526
- US-B1- 6 838 999

## Beschreibung

Das Verfahren betrifft ein Verfahren zum Betrieb eines Stromverteilers, der einen ersten Controller sowie mehrere Anschlussmodule aufweist, die mittels Schutzschaltern bestückt oder bestimmbar sind. Die Erfindung betrifft ferner einen Stromverteiler sowie einen Schutzschalter.

Zur zentralen Stromversorgung werden üblicherweise Stromverteiler verwendet. Diese sind an einer Hauptstromleitung angeschlossenen, und von dieser gehen mehrere Nebenkreise ab. Meist ist jeder dieser Nebenkreise mittels einer geeigneten Schutzvorrichtung, wie einem Schutzschalter, abgesichert. Mittels Betätigung der Schutzschalter ist es somit möglich, den jeweils zugeordneten Nebenkreis still zu setzen oder zumindest eine Bestromung zu unterbinden. Damit eine Montage der Schutzschalter vereinfacht ist, umfasste der Stromverteiler meist eine Anzahl an Anschlussmodulen, in die der jeweilige Schutzschalter einsteckbar ist. Der Stromverteiler selbst ist meist an einer Hutschiene in einem Schaltschrank montiert.

Aus WO 2017/076526 A1 ist ein Stromverteiler sowie ein Verfahren zum Betrieb eines Stromverteilers bekannt. Hierbei ist vorgesehen, dass jedes der Anschlussmodule einen zugeordneten Sockelwiderstand aufweist, die elektrisch in Reihe geschaltet sind. Anhand einer jeweils darüber abfallenden elektrischen Spannung wird eine Adresse des in dem jeweiligen Anschlussmodul bestückten Schutzschalters ermittelt. Infolgedessen ist eine Kommunikation mit einem weiteren, stationären Controller sowie der Schutzschalter untereinander mittels eines Bussystems ermöglicht. Somit ist beispielsweise eine Fernwartung der Schutzschalter möglich, oder diese können nachparametrisiert werden. Auch ist ein Auslösen der einzelnen Schutzschalter mittels eines zentralen Befehls ermöglicht.

Bei dem oben genannten Stromverteiler weisen bei Erstinbetriebnahme des Stromverteilers, also bei der ersten Bestromung sämtlicher Schutzschalter, diese eine Standardadresse auf. Sämtliche Schutzschalter sind daher von dem Controller lediglich über die Standardadresse oder über eine Broadcast Adresse ansprechbar. Daher wird jede Anfrage des Controllers an die Schutzschalter im Wesentlichen zeitgleich von allen Schutzschaltern beantwortet. Eine einzelne Zuordnung der sich gegenseitig überlagernden Antworten zu dem Schutzschalter ist mittels des Controllers nicht mehr möglich. Daher ist eine Inbetriebnahme erschwert.

WO 2015/062731 A1 offenbart ein Verfahren zur Identifizierung der relativen Einbauposition von Modulen, die jeweils in Reihe geschaltete Widerstände und ein Schaltelement aufweisen, das mit einer Referenzpotenzial verbindbar sind.

Die EP 0 806 751 A1 und die US 6,838,999 B1 offenbaren eine automatisch Adressierung von I/O-Modulen mit Widerstandsketten und Schaltelementen zum Verbinden der jeweiligen Widerstände mit einem Referenzpotenzial.

Der Erfindung liegt die Aufgabe zugrunde, ein besonders geeignetes Verfahren zum Betrieb eines Stromverteilers sowie einen besonders geeigneten Schutzschalter als auch einen besonders geeigneten Stromverteiler anzugeben, wobei vorteilhafterweise eine Zuverlässigkeit erhöht und/oder eine Inbetriebnahme vereinfacht ist.

Hinsichtlich des Verfahrens wird diese Aufgabe durch die Merkmale des Anspruchs 1, hinsichtlich des Schutzschalters durch die Merkmale des Anspruchs 7 und hinsichtlich des Stromverteilers durch die Merkmale des Anspruchs 8 erfindungsgemäß gelöst. Vorteilhafte Weiterbildungen und Ausgestaltungen sind Gegenstand der jeweiligen Unteransprüche.

Das Verfahren dient dem Betrieb eines Stromverteilers. Der Stromverteiler ist beispielsweise ein Bestandteil einer Industrieanlage, einer Hausversorgung, eines Bootes oder eines sonstigen Kraftfahrzeugs, das insbesondere landgebunden ist. Zumindest ist der Stromverteiler geeignet, dort jeweils montiert zu werden und der Stromverteilung zu dienen. Insbesondere weist der Stromverteiler einen Anschluss an eine Hauptleitung auf. Ferner weist der Stromverteiler zweckmäßigerweise mehrere Anschlüsse für Nebenkreise auf. Diese sind zweckmäßigerweise zumindest indirekt über weitere Bestandteile des Stromverteilers mit den Anschlüssen der Hauptleitung verbunden.

Der Stromverteiler umfasst ferner eine Anzahl an Anschlussmodulen, wobei zweckmäßigerweise jedes der Anschlussmodule einem der etwaigen Nebenkreise zugeordnet ist. Beispielsweise sind die einzelnen Anschlussmodule zueinander baugleich, was Herstellungskosten vereinfacht. Jeder der Anschlussmodule weist zweckmäßigerweise einen Steckplatz auf, in den ein Schutzschalter einsteckbar ist. Mit anderen Worten ist jedes der Anschlussmodule mit dem jeweiligen Schutzschalter bestückt oder zumindest bestückbar. Zweckmäßigerweise ist jedes der Anschlussmodule vorgesehen, lediglich einen einzigen Schutzschalter aufzunehmen. Die Anschlussmodule sind vorzugsweise in einer Reihe nebeneinander angeordnet, was eine Montage der Schutzschalter vereinfacht. Auch ist ein Platzbedarf verringert.

Die Bestückung der Schutzschalter erfolgt beispielsweise unlösbar, sodass ein Ablösen und ein Austausch des Schutzschalters aus dem jeweiligen Anschlussmodul nicht möglich sind. Besonders bevorzugt jedoch ist die Bestückung lösbar, und der Schutzschalter ist beispielsweise lediglich in das jeweilige Anschlussmodul eingesteckt. Zweckmäßigerweise ist hierbei eine Sicherungsvorrichtung vorhanden, wie beispielsweise eine Verrastung, sodass ein unbeabsichtigtes Lösen des Schutzschalters aus dem jeweiligen Anschlussmodule verhindert ist. Somit ist eine Sicherheit erhöht.

Beispielsweise ist bei dem Stromverteiler keines der Anschlussmodule mit einem derartigen Schutzschalter bestückt, oder genau eines der Anschlussmodule ist mit genau einem Schutzschalter bestückt. In einer weiteren Alternative sind beispielsweise mehrere Anschlussmodule mit jeweils einem zugeordneten Schutzschalter bestückt, oder sämtliche Anschlussmodule sind mit jeweils einem zugeordneten Schutzschalter bestückt.

Jedes Anschlussmodul weist einen Versorgungsstecker auf, mittels dessen insbesondere eine elektrische Versorgung des jeweiligen zugeordneten Schutzschalters, sofern dieser vorhanden ist, erfolgt. Der Versorgungsstecker weist beispielsweise zwei Pole auf. Insbesondere umfasst der Stromverteiler einen ersten Controller mit einer Stromversorgung, wie einem Transformator, mittels derer eine Versorgungsspannung bereitgestellt wird, die an den Versorgungsstecker angelegt ist. Insbesondere ist hierbei Versorgungsspannung eine Gleichspannung und beispielsweise zwischen 2 V und 24 V. Zum Beispiel ist einer der Pole des Versorgungssteckers gegen ein Bezugspotential geführt, das beispielsweise Masse ist. Somit ist in jedem der Schutzschalter das Bezugspotential vorhanden. Zweckmäßigerweise sind die Versorgungstecker zueinander elektrisch parallel geschaltet, sodass eine unabhängige Versorgung der einzelnen Schutzschalter erfolgen kann.

Ferner umfasst jedes Anschlussmodul einen Busstecker eines gemeinsamen Bussystems. Das Bussystem erstreckt sich hierbei insbesondere zwischen sämtlichen Anschlussmodule und weist zweckmäßigerweise eine Anzahl an Adern auf. Zudem ist das Bussystem signaltechnisch mit dem ersten Controller verbunden. Der erste Controller ist ein Bestandteil des Stromverteilers und beispielsweise mechanisch an die Anschlussstecker angereiht. Insbesondere ist der erste Controller als Master des Bussystems ausgebildet und gemäß dessen betrieben.

Ferner weist der erste Controller zweckmäßigerweise eine Stromquelle auf, die insbesondere eine Gleichstromquelle ist. Mittels dieser ist eine Widerstandskette versorgt, die aus mehreren Sockelwiderständen gebildet ist. Die Widerstandskette ist dabei gegen ein Bezugspotential geführt, das beispielsweise ebenfalls mittels des ersten Controllers bereitgestellt ist. Zum Beispiel ist dabei die Widerstandskette elektrisch direkt gegen das Bezugspotential geführt. Besonders bevorzugt jedoch erfolgt ein indirektes Führen gegen das Bezugspotential, insbesondere über einen weiteren ohmschen Widerstand. Geeigneterweise ist das Bezugspotential gleich dem etwaigen Bezugspotential, das die Versorgungsstecker/ Stromversorgung aufweist. Somit ist eine Anzahl an unterschiedlichen elektrischen Potentialen und daher auch eine Komplexität verringert. Zum Beispiel wird als Bezugspotential Masse herangezogen, vorzugsweise Erde. Somit ist eine Verschaltung vereinfacht. Folglich ist auch die Gleichstromquelle des ersten Controllers gegen Masse geführt, wohingegen der verbleibende Anschluss mit der Widerstandskette elektrisch kontaktiert ist. Insbesondere wird mittels der Gleichstromquelle ein elektrischer Strom bereitgestellt, der kleiner als 1 A, 0,5 A oder 0,01 A ist. Insbesondere ist der elektrische Strom zwischen 100 mA und 0,1 mA und beispielsweise zwischen 10 mA und 1 mA. Folglich ist es möglich, vergleichsweise kostengünstige Bauteile heranzuziehen. Auch ist eine elektrische Isolation vereinfacht.

Zusammenfassend erfolgt mittels des ersten Controllers bevorzugt ein Kontrollieren der Kommunikation über das Bussystem als auch eine Versorgung der Widerstandskette. Zweckmäßigerweise erfolgt mittels des ersten Controllers, insbesondre der Stromquelle, zudem eine Bereitstellung einer Gleichspannung an den Versorgungssteckern des Stromverteilers. Folglich sind die Anschlussmodule an den erste Controller angeschlossen, vorzugsweise mittels jeweils eines geeigneten Steckers, mittels dessen die Versorgung der jeweiligen Komponenten des jeweiligen Anschlussmodule zu erfolgt. Zum Beispiel ist der erste Controller mittels eines anwendungsspezifischen Schaltkreises (ASIC), eines Mikrocontrollers und/oder mehrerer Baugruppen gebildet, die insbesondere jeweils eine Flachbaugruppe umfassen. An jeder dieser Flachbaugruppe ist beispielsweise eine Anzahl an elektrischen/elektronischen Bauteile angelötet.

Die Sockelwiderstände der Widerstandskette sind den Anschlussmodule zugeordnet, wobei jedes der Anschlussmodule genau einen der Sockelwiderstände aufweist. Somit sind genauso viele Widerstände wie Anschlussmodule vorhanden. Beispielsweise unterscheiden sich die Sockelwiderstände zueinander. Besonders bevorzugt jedoch sind diese zueinander gleich oder weisen zumindest den gleichen ohmschen Widerstand auf. Insbesondere ist der ohmsche Widerstand hierbei zwischen 10 Ω und 100 kΩ, zwischen 100 Ω und 10 kΩ und beispielsweise im Wesentlichen 1 kΩ, wobei zum Beispiel eine Abweichung von 10 %, 5 %, 2 %, 1% oder 0 % vorhanden ist.

Jeder der Schutzschalter, die zur Bestückung der Anschlussmodule vorgesehen sind, oder mittels derer die Anschlussmodule bestückt sind, weist einen zweiten Controller zur Erfassung der an dem zugeordneten Sockelwiderstand abfallende elektrische Spannung auf. Beispielsweise umfasst der zweite Controller einen Spannungsmesser, mittels dessen die an dem zugeordneten Sockelwiderstand abfallende elektrische Spannung erfasst wird. Im Montagezustand ist beispielsweise der Schutzschalter elektrisch mit der Widerstandskette kontaktiert, vorzugsweise beidseitig des jeweils zugeordneten Sockelwiderstands. Somit weist der Schutzschalter jeweils zwei hierfür vorgesehene Kontakte auf, und auch mittels der Anschlussmodule sind vorzugsweise zwei derartige Kontakte bereitgestellt, die vorzugsweise ein Bestandteil eines gemeinsamen Steckplatzes sind. Der gemeinsame Steckplatz umfasst vorzugsweise ebenfalls geeignete Kontakte zur Kontaktierung des jeweiligen Versorgungssteckers sowie des jeweiligen Bussteckers. Somit sind sämtliche Kontakte mittels des gemeinsamen Steckplatzes gebildet, was eine Montage vereinfacht.

Auch ist im Montagezustand der jeweilige Schutzschalter signaltechnisch mit dem zugeordneten Busstecker verbunden und mittels des Versorgungssteckers bestromt. Zumindest jedoch ist mittels der Busstecker eine signaltechnische Verbindung zu dem jeweiligen Schutzschalter herstellbar und mittels der Versorgungsstecker eine Bestromung des jeweiligen Schutzschalters durchführbar. Insbesondere ist im Montagezustand jeder zweite Controller signaltechnisch mit dem Busstecker verbunden und wird mittels des Versorgungssteckers bestromt. Zum Beispiel ist der zweite Controller mittels eines anwenderspezifischen Schaltkreises (ASIC), eines Mikrocontrollers und/oder mehrerer Baugruppen gebildet, die insbesondere jeweils eine Flachbaugruppe umfassen. An jeder dieser Flachbaugruppe ist beispielsweise eine Anzahl an elektrischen/elektronischen Bauteile angelötet.

Zudem weist jeder Schutzschalter ein Schaltelement auf, das mittels des zweiten Controllers betätigt ist. Das Schaltelement ist im Montagezustand zwischen der dem ersten Controller abgewandten Seite des zugeordneten Sockelwiderstands und dem Bezugspotential geschaltet. Folglich wird bei Betätigung des Schaltelements mittels des zweiten Controllers der jeweils zugeordnete Sockelwiderstand gegen das Bezugspotential geführt. Infolgedessen werden etwaige weitere Sockelwiderstände, die in diesem Anschlussmodule bezüglich des ersten Controllers nachgeordnet sind, nicht weiter von der Gleichstromquelle des ersten Controllers versorgt.

Das Schaltelement ist beispielsweise ein Relais oder besonders bevorzugt ein Halbleiterschalter, wie ein Feldeffekttransistor, beispielsweise ein MOSFET. Insbesondere ist eine maximale Stromtragfähigkeit des Schaltelements vergleichsweise gering und zweckmäßigerweise kleiner als 0,5 A, 0,1 A oder 0,05 A. insbesondere ist eine maximal mittels des Schaltelements schaltbare elektrische Spannung kleiner als 30 V. Somit ist es möglich, vergleichsweise kostengünstige Bauteile für das Schaltelement heranzuziehen.

Mittels des Schutzschalters wird insbesondere eine bestimmte weitere Funktion durchgeführt. Beispielsweise wird bei Betrieb ein mittels des Anschlussmoduls geführter elektrische Strom und/oder eine dort anliegende elektrische Spannung überwacht. Vorzugsweise ist diese gleich dem elektrischen Strom bzw. der elektrischen Spannung, die mittels des etwaigen zugeordneten Nebenkreises geführt wird. Somit erfolgt mittels des Schutzschalters eine Überwachung des mittels des Nebenkreises geführten elektrischen Stroms und/oder der dort anliegenden elektrischen Spannung. Beispielsweise wird eine mittels des zugeordneten Nebenkreises geführt Leistung mittels des Schutzschalters bei Betrieb überprüft, oder zumindest eine Änderung der jeweiligen Größen. Auf diese Weise ist es möglich, mittels des Schutzschalters einen Fehlerfall des Nebenkreises zu erfassen.

Insbesondere erfolgt bei Erfassen oder Bestimmen eines derartigen Fehlerfalls ein Abschalten des Schutzschalters, sodass der Nebenkreis nicht weiter bestromt wird. Hierfür weist der Schutzschalter zweckmäßigerweise ein weiteres Schaltelement auf, das beispielsweise ein Relais, ein Halbleiterschalter oder eine Kombination hieraus ist. Das oder die weiteren Schaltelemente sind somit insbesondere in den Strompfad des Nebenkreises eingebracht. Diese werden vorzugsweise ebenfalls mittels des zweiten Controllers gesteuert, oder der Schutzschalter weist einen weiteren Controller hierfür auf. Beispielsweise sind hierbei die weiteren Schaltelemente vorgesehen und eingerichtet, eine elektrische Spannung zwischen 10 V und 1000 V oder zwischen maximal 20 V und 500 V zu schalten und/oder einen elektrischen Strom von maximal 1 A, 5 A, 10 A oder 50 A zu führen.

Das Verfahren sieht vor, dass sichergestellt wird, dass das Schaltelement jedes Schutzschalters geschlossen ist, wenn dem Schutzschalter keine spezifische Adresse zugewiesen ist. Die (spezifische) Adresse ist hierbei für die Kommunikation über das Bussystem, zweckmäßigerweise mittels eines geeigneten (Bus)Protokolls, erforderlich, wobei der Schutzschalter insbesondere als Slave ausgebildet ist. Sofern dem Schutzschalter keine spezifische Adresse, im nachfolgenden insbesondere auch nur als Adresse bezeichnet, zugewiesen ist, ist somit eine Kommunikation über das Bussystem mittels eines Busprotokolls nicht oder lediglich eingeschränkt möglich. Bei Bestimmungsgemäßen Betrieb weisen daher sämtliche Schutzschalter geeigneterweise unterschiedliche spezifische Adressen auf.

Falls keine Adresse zugewiesen ist, weist der Schutzschalter beispielsweise keinen Eintrag oder dergleichen auf. Mit anderen Worten befindet sich bei dem Wert der Adresse ein Platzhalter. Alternativ weist der Schutzschalter, sofern diesem keine spezifische Adresse zugewiesen ist, eine Standardadresse, wie Null (0), auf. Vorzugsweise wird diese Standardadresse bei Fertigung vergeben. Zum Beispiel wird die spezifische Adresse bei Ausfall einer Stromversorgung des Stromverteilers oder zumindest des Schutzschalters gelöscht/aufgehoben. Insbesondere wird in diesem Fall die Standardadresse zugewiesen, zum Beispiel bei einer erneuten Bestromung.

Das Sicherstellen des Schließens des Schaltelements erfolgt beispielsweise dadurch, dass das Schaltelement geschlossen wird. Alternativ wird beispielsweise der Schutzschalter bereits mit geschlossenem Schaltelement ausgeliefert. Vorzugsweise wird der Schaltzustand mittels einer geeigneten Routine überprüft. Insbesondere wird somit bei Erstbestromung des Schutzschalters, also insbesondere dann, wenn das zugehörige Anschlussmodule bestückt wird, geschlossen. Aufgrund des geschlossenen Schaltelements wird somit die Widerstandskette nach dem Schaltelement gegen das Bezugspotential geführt, sodass bei dem einem etwaigen weiteren Schutzschalter zugeordneten Sockelwiderstand keine elektrische Spannung anfällt, falls dieser weiter von dem ersten Controller weg versetzt ist.

In einem weiteren Arbeitsschritt wird mittels des ersten Controllers eine Anfrage in das Bussystem eingespeist. Die Anfrage weist beispielsweise eine vergleichsweise kurze Länge auf und ist an sämtliche Teilnehmer des Bussystems gerichtet, sodass von diesen die Anfrage unabhängig von einer aktuellen Adresse empfangen wird.

In einem weiteren Arbeitsschritt wird mittels des zweiten Controllers des Schutzschalters eine Antwort in das Bussystem eingespeist. Die Antwort wird hierbei lediglich dann eingespeist, wenn über den zugeordneten Sockelwiderstand eine elektrische Spannung abfällt, die somit unterschiedlich von 0 V ist. Falls hingegen über den zugeordneten Sockelwiderstand keine elektrische Spannung abfällt, wird keine Antwort in das Bussystem eingespeist. Insbesondere ist hierbei die elektrische Spannung, bei der die Antwort eingespeist wird, größer als 0,5 V und beispielsweise im Wesentlichen 1 V. Die Antwort ist an den ersten Controller gerichtet, sodass dieser die Antwort empfängt. Beispielsweise weist dabei die Antwort keinen Sender auf, oder es wird spezifiziert, dass ein bestimmter Schutzschalters die Antwort ausgesandt hat. Insbesondere wird die Antwort lediglich dann in das Bussystem eingespeist, wenn dem Schutzschalter noch keine Adresse zugewiesen ist. Sofern diesem bereits eine Adresse zugewiesen wurde, erfolgt zweckmäßigerweise kein Einspeisen der Antwort.

Sofern mehrere Anschlussmodule mit Schutzschaltern bestückt sind, denen keine Adresse zugewiesen ist, fällt lediglich bei einem einzigen der Schutzschalter, nämlich bei dem am nächsten bezüglich des ersten Controllers angeordnet, die elektrische Spannung ab. Somit wird lediglich von diesem Schutzschalters die Antwort zu dem ersten Controller ausgesandt. Dies erfolgt auch, sofern beispielsweise sämtliche Anschlussmodule mit jeweils einem zugeordneten Schutzschalter bestückt sind, und diesen bislang noch keine Adresse zugewiesen ist, sodass eine Buskommunikation noch nicht erfolgen kann.

Falls keine Antwort mittels des ersten Controllers empfangen wird, ist beispielsweise kein Schutzschalter vorhanden. Daher ist bei Ausbleiben der Antwort im ersten Controller das Wissen vorhanden, dass keiner der Anschlussmodule mit einem Schutzschalters bestückt ist. Alternativ ist beispielsweise bereits jedem Schutzschalter eine Adresse zugewiesen, sodass ein ungestörter Weiterbetrieb ermöglicht ist. Sofern bereits in dem ersten Controller hinterlegt ist, dass mehrere Schutzschalters vorhanden sind, und eine Antwort dennoch erfasst wird, ist ableitbar, dass ein weiterer Schutzschalters vorhanden ist, und dass beispielsweise ein weiteres der Anschlussmodule mit einem Schutzschalter bestückt wurde. Somit ist auch bei Betrieb eine Überprüfung möglich, ob ein weiterer Schutzschalters montiert wurde. Insbesondere wird das Verfahren zumindest zur Inbetriebnahme des Stromverteilers herangezogen, also dann, wenn insbesondere eine Erstbestromung der Schutzschalter oder zumindest der Anschlussmodule erfolgt, insbesondere mittels der Stromversorgung.

Aufgrund des Verfahrens ist somit in dem ersten Controller das Wissen vorhanden, ob ein Schutzschalter ohne zugewiesene Adresse vorhanden ist, oder ob die Anschlussmodule beispielsweise nicht bestückt sind. Somit ist eine Zuverlässigkeit erhöht.

Beispielsweise bleibt das Schaltelement oder die Schaltelemente auch weiterhin geschlossen. Besonders bevorzugt jedoch wird im Anschluss an das Einspeisen der Antwort das Schaltelement geöffnet. Somit fällt zumindest über einen weiteren Sockelwiderstand eine elektrische Spannung an. Daher ist für einen weiteren Schutzschalters ersichtlich, ob dieser als Zweitnächste zu dem ersten Controller angeordnet ist. Insbesondere wird nach Einspeisen der Antwort sämtliche Schaltelemente bei den Schutzschaltern geöffnet. Da in dem ersten Controller das Wissen vorhanden ist, dass zumindest ein Schutzschalter vorhanden ist, dem keine Adresse zugewiesen ist, kann eine weiteren Buskommunikation mit den Schutzschaltern, die keine Adresse aufweisen, erfolgen. Insbesondere ist hierbei ein konkretes Wissen um sämtliche Schutzschalter nicht erforderlich.

Beispielsweise werden die Schaltelemente bei sämtlichen Schutzschaltern geöffnet, wenn mittels dieser die Antwort des (einen) zweiten Controllers empfangen wurde, die an den ersten Controller gerichtet ist. Folglich wird bei sämtlichen zweiten Controllern das zugeordnete Schaltelement geöffnet, wenn die Antwort erfasst wurde. Besonders bevorzugt jedoch wird mittels des ersten Controllers eine Anforderung zum Öffnen der Schaltelemente in das Bussystem eingespeist, wenn mittels dessen die Antwort empfangen wurde. Die Aufforderung ist hierbei insbesondere an sämtliche Schutzschalter gerichtet oder zumindest die, denen keine Adresse zugewiesen ist. Aufgrund der Verwendung der Aufforderung zum Öffnen der Schaltelemente erfolgt dies lediglich dann, wenn der erste Controller tatsächlich die Antwort empfangen hat. Somit ist sichergestellt, dass vor dem Öffnen sämtlicher Schaltelemente in dem ersten Controller tatsächlich die Information über den/die zusätzlichen Schutzschalters vorhanden ist. Somit ist eine Zuverlässigkeit weiter erhöht.

Beispielsweise wird jedem Schutzschalters mittels des ersten Controllers eine Adresse zugewiesen. Besonders bevorzugt jedoch wird mittels jedes Schutzschalters die jeweils eigene Adresse erstellt, vorzugsweise nach entsprechender Aufforderung durch den ersten Controller. Das Erstellen der (Spezifischen) Adresse erfolgt zweckmäßigerweise in Abhängigkeit der über den zugeordneten Sockelwiderstand abfallenden elektrischen Spannung. Nach dem Öffnen der Schaltelemente fällt über sämtliche Sockelwiderstande eine elektrische Spannung an, wobei der Wert der elektrischen Spannung abhängig von der Anzahl zwischen dem jeweiligen Anschlussmodul und den ersten Controller angeordneten Sockelwiderständen ist. Somit ist jedem der Anschlussmodule jeweils eine eineindeutige spezifische Adresse zugeordnet, die von dem jeweiligen Schutzschalter insbesondere übernommen wird. Die jeweilige Adresse ist insbesondere unabhängig davon, wie viele Schutzschalter tatsächlich vorhanden sind, also unabhängig davon, wie viele Anschlussmodule tatsächlich mit Schutzschaltern bestückt sind. Insbesondere wird zur Ermittlung der Adresse die elektrische Spannung des jeweiligen Sockelwiderstands gegenüber dem Bezugspotential erfasst.

Vorzugsweise wird im Anschluss die Adresse jedes Schutzschalters in das Bussystem eingespeist. Hierfür wird beispielsweise mittels des ersten Controllers jeder möglichen Adresse ein bestimmter Zeitslot oder ein Zeitbereich bereitgestellt. Sofern dieser auftritt, wird mittels des jeweiligen zweiten Controllers insbesondere die jeweilige Adresse in das Bussystem eingespeist oder zumindest eine Statusmeldung, sodass dem ersten Controller mitgeteilt wird, dass zu dieser Adresse ein Schutzschalters vorhanden ist. Somit ist im Anschluss daran jedem Schutzschalters eine Adresse zugeordnet, und in dem ersten Controller ist das Wissen vorhanden, ob und wie viele Schutzschalters vorhanden sind, sowie welche Adresse diese aufweisen, also diesen zugewiesen ist. Infolgedessen ist es möglich, mittels des Bussystems eine abgestimmte Kommunikation zwischen dem erste Controller und den zweiten Controller durchzuführen. Zweckmäßigerweise wird die jeweilige spezifische Adresse nach einer entsprechenden Aufforderung durch den ersten Controller von dem jeweiligen Schutzschalter in das Bussystem eingespeist.

Beispielsweise wird die Anfrage des ersten Controllers lediglich ein einziges Mal in das Bussystem eingespeist, insbesondere bei Inbetriebnahme des Stromverteilers. Besonders bevorzugt jedoch wird die Anfrage mehrmals eingespeist. Zum Beispiel erfolgt das Einspeisen der Anfrage mittels des ersten Controllers in Abhängigkeit einer Benutzereingabe. Vorzugsweise wird das Einspeisen der Anfrage mittels des ersten Controllers zyklisch wiederholt. Insbesondere ist hierbei eine konstante Periodendauer vorgegeben, die insbesondere zwischen 100 ms und 2 Sekunden und beispielsweise zwischen 200 ms und 1 Sekunde ist. Insbesondere ist die Periodendauer gleich 500 ms. Aufgrund der zyklischen Wiederholung werden auch während des Betriebs des Stromverteilers neu montierte Schutzschalter mittels des ersten Controllers erkannt. Sofern diese nämlich montiert werden, wird bei diesen wiederum sichergestellt, dass das Schaltelement geschlossen ist. Und daher wird bei Empfang der Anfrage die Antwort eingespeist. Folglich ist eine Montage von Schutzschaltern ermöglicht, ohne dass eine manuelle Konfiguration des Stromverteilers erfolgen muss. Daher ist ein Komfort erhöht.

Der Stromverteiler weist einen ersten Controller und eine Anzahl von daran angeschlossenen Anschlussmodulen auf. Beispiel umfasst der Stromverteiler zwischen 2 Anschlussmodulen und 40 Anschlussmodule insbesondere zwischen 5 Anschlussmodule und 30 Anschlussmodule. Vorzugsweise umfasst der Stromverteiler genau 16 Anschlussmodule. Der erste Controller und die Anschlussmodule bilden zweckmäßigerweise eine gemeinsame Baueinheit, die an einer Hut- oder G-Schiene montierbar ist. Zum Beispiel umfasst der Stromverteiler eine derartige Schiene. Die Anschlussmodule sind vorzugsweise aneinandergereiht. Jedes Anschlussmodul umfasst einen Sockelwiderstand, wobei sämtliche Sockelwiderstände elektrisch in Reihe geschaltet sind und somit eine Widerstandskette bilden. Die Widerstandskette ist mittels einer Gleichstromquelle des ersten Controllers versorgt, und somit ist mittels des ersten Controllers eine Gleichspannung an die Widerstandskette angelegt. Zumindest ist der erste Controller hierfür geeignet, insbesondere vorgesehen und eingerichtet.

Die Widerstandskette ist gegen ein Bezugspotential geführt, das beispielsweise ebenfalls mittels des ersten Controllers bereitgestellt ist. Zum Beispiel ist dabei die Widerstandskette elektrisch direkt gegen das Bezugspotential geführt. Besonders bevorzugt jedoch erfolgt ein indirektes Führen gegen das Bezugspotential, insbesondere über einen weiteren ohmschen Widerstand. Das Bezugspotential ist beispielsweise mittels des ersten Controllers bereitgestellt und/oder mittels Masse gebildet, vorzugsweise Erde.

Zudem weist jedes Anschlussmodul einen Versorgungsstecker zur elektrischen Versorgung eines daran angebundenen weiteren Bauteils, wie eines Schutzschalters auf. Mit anderen Worten dient der Versorgungsstecker der Bestromung des jeweils zugeordneten Schutzschalters, mittels dessen das jeweilige Anschlussmodul bestückt ist. Jedes Anschlussmodul ist somit für die Bestückung mittels eines jeweils zugeordneten Schutzschalters geeignet, insbesondere vorgesehen und eingerichtet. Hierfür weist jedes Anschlussmodul zweckmäßigerweise eine geeignete Aufnahme auf. Bevorzugt umfasst jedes Anschlussmodul eine geeignete mechanische Vorrichtung zur Stabilisierung des jeweils zugeordneten Schutzschalters. Vorzugsweise erfolgt hierbei die Bestückung lösbar.

Zudem umfasst jedes Anschlussmodul einen Busstecker eines gemeinsamen Bussystems, das signaltechnisch mit dem ersten Controller verbunden ist, mittels dessen zweckmäßigerweise ein Master gebildet ist. Auch ist im Montagezustand jeder Schutzschalter signaltechnisch mit dem zugeordneten Busstecker und somit auch mit dem Bussystem verbunden.

Jeder Schutzschalter umfasst zweckmäßigerweise einen zweiten Controller zur Erfassung der an dem zugeordneten Sockelwiderstand abfallenden elektrischen Spannung. Insbesondere ist mittels des jeweils zugeordneten Anschlussmoduls eine geeignete elektrische Kontaktierung des Sockelwiderstands bereitgestellt. Ferner weist jeder Schutzschalters ein mittels des zweiten Controllers betätigtes Schaltelement auf, das im Montagezustand elektrisch zwischen der dem ersten Controller abgewandten Seite des zugeordneten Sockelwiderstands und dem Bezugspotential geschaltet ist.

Der erste Controller ist geeignet, insbesondere vorgesehen und eingerichtet, ein Verfahren durchzuführen, bei dem sichergestellt wird, dass das Schaltelement jedes Schutzschalters geschlossen ist, wenn dem Schutzschalter keine spezifische Adresse zugewiesen ist, und mittels des ersten Controllers eine Anfrage in das Bussystem eingespeist wird. Das Sicherstellen erfolgt hierbei beispielsweise mittels Überprüfen, ob seitens des ersten Controllers bereits eine Aufforderung zum Öffnen des oder der Schaltelemente in das Bussystem eingespeist wurde. Sofern dies noch nicht erfolgt ist, ist insbesondere sichergestellt, dass das Schaltelement jedes Schutzschalters geschlossen ist.

Mittels des zweiten Controllers wird eine Antwort in das Bussystem eingespeist, falls über den zugeordneten Sockelwiderstand eine elektrische Spannung abfällt. Das Verfahren wird somit zumindest teilweise mittels des ersten Controllers durchgeführt. Der erste Controller ist insbesondere schaltungs- und/oder softwaretechnische hierfür eingerichtet. Somit ist der Stromverteiler gemäß diesem Verfahren betrieben. Insbesondere umfasst der Stromverteiler eine Anzahl an derartigen Schutzschaltern, die vorzugsweise ein Bestandteil des Stromverteilers werden, wenn diese mit dem jeweiligen zugeordneten Anschlussmodule verbunden werden.

Der Schutzschalter ist geeignet, insbesondere vorgesehen und eingerichtet, an einem Stromverteiler montiert und somit insbesondere ein Bestandteil des Stromverteilers zu werden. Hierfür wird Schutzschalter in ein Anschlussmodul des Stromverteilers eingesteckt. Das Anschlussmodule und/oder der Schutzschalter sind hierfür geeignet, insbesondere vorgesehen und eingerichtet. Insbesondere ist dabei der Schutzschalters signaltechnisch mit einem Busstecker des Anschlussmoduls verbunden und wird mittels eines Versorgungssteckers des Anschlussmoduls versorgt und somit bestromt. Zusammenfassend dient der Schutzschalter der Bestückung des Stromverteilers, der einen ersten Controller und eine Anzahl von daran angeschlossenen Anschlussmodulen umfasst, die jeweils einen Sockelwiderstand aufweisen, die eine in Reihe geschaltete Widerstandskette bilden. Die Widerstandskette ist mittels einer Gleichstromquelle des ersten Controllers versorgt und gegen ein Bezugspotential geführt, wobei jedes Anschlussmodul den Versorgungsstecker und den Busstecker eines gemeinsamen Bussystems aufweist, das signaltechnisch mit dem ersten Controller verbunden ist.

Der Schutzschalter umfasst einen zweiten Controller zur Erfassung der an dem zugeordneten Sockelwiderstand abfallenden elektrischen Spannung, und ein mittels des zweiten Controllers betätigtes Schaltelement, das im Montagezustand zwischen der dem ersten Controller abgewandten Seite des zugeordneten Sockelwiderstands und dem Bezugspotential schaltbar ist. Der zweite Controller das beispielsweise mittels eines anwendungsspezifischen Schaltkreises (ASIC) und/oder eines Mikrochips/Mikroprozessors gebildet oder umfasst zumindest diese.

Der zweite Controller ist zumindest teilweise gemäß einem Verfahren betrieben, bei dem sichergestellt wird, dass das Schaltelement geschlossen ist, wenn dem Schutzschalter keine spezifische Adresse zugewiesen ist. Wenn mittels des ersten Controllers eine Anfrage in das Bussystem eingespeist wird, wird mittels des zweiten Controllers eine Antwort in das Bussystem eingespeist, falls über den zugeordneten Sockelwiderstand eine elektrische Spannung abfällt. Der zweite Controller ist hierfür geeignet, insbesondere vorgesehen und eingerichtet.

Der Schutzschalter umfasst zweckmäßigerweise einen Leistungshalbleiterschalter und/oder ein Relais, die beispielsweise elektrisch in Reihe oder parallel geschaltet sind. Mittels dieser erfolgt insbesondere eine Wahrnehmung einer Schutzfunktion, sodass der Schutzschalter ein Schutzmechanismus ist. Vorzugsweise umfasst der Schutzschalter einen Stromsensor und/oder einen elektrischen Spannungssensor. Zweckmäßigerweise ist der Leitungshalbleiterschalter /Relais in Abhängigkeit der jeweiligen Sensordaten betätigt.

Sofern ein Bauteil als erstes, zweites, drittes,... Bauteil bezeichnet wird, ist insbesondere lediglich darunter ein bestimmtes Bauteil zu verstehen. Insbesondere bedeutet dies nicht, dass eine bestimmte Anzahl an derartigen Bauteilen vorhanden ist.

Die im Zusammenhang mit dem Verfahren zum Betrieb eines Stromverteilers erläuterten Weiterbildungen und Vorteile sind sinngemäß auch auf den Stromverteiler/Schutzschalter sowie untereinander zu übertragen und umgekehrt

Nachfolgend wird ein Ausführungsbeispiel der Erfindung anhand einer Zeichnung näher erläutert. Darin zeigen:
- Fig. 1: schematisch vereinfacht einen Schaltplan eines Stromverteilers, und
- Fig. 2: ein Verfahren zum Betrieb des Stromverteilers.

Einander entsprechende Teile sind in allen Figuren mit den gleichen Bezugszeichen versehen.

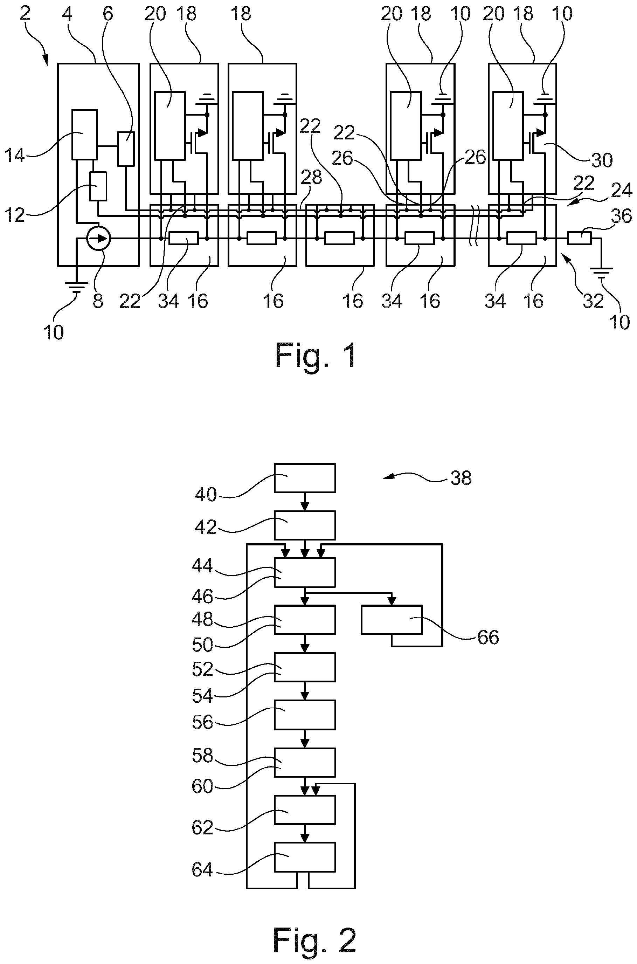

In Figur 1 ist ein Stromverteiler 2 mit einem ersten Controller 4 gezeigt. Der Stromverteiler 2 ist ein Bestandteil einer Gebäudeeinrichtung, mittels derer eine Bestromung von einzelnen (elektrischen) Nebenkreisen des Gebäudes erfolgt. Hierfür ist der Stromverteiler 2 in einem Schaltkreis des Gebäudes angeordnet und dort befestigt. Auch ist der Stromverteiler 2 in nicht näher dargestellter Weise an eine Hauptstromleitung angeschlossen. Der erste Controller 4 weist eine Stromversorgung 6 auf, mittels derer eine Gleichspannung von 24 V bereitgestellt ist. Zudem umfasst der erste Controller 4 eine Gleichstromquelle 8, mittels derer ein Gleichstrom von zwischen 2 mA und 10 mA, insbesondere 4,8 mA, bereitgestellt ist. Hierbei ist die Gleichstromquelle 8 gegen ein Bezugspotential 10 geführt, dass Masse ist. Der erste Controller 4 umfasst zudem eine Busschnittstelle 12 sowie eine Steuereinheit 14, mittels derer sowohl die Gleichstromquelle 8 als auch die Stromversorgung 6 sowie die Busschnittstelle 12 gesteuert sind.

Der Stromverteiler 2 umfasst zudem eine Anzahl von Anschlussmodulen 16, die zueinander baugleich und in Reihe an den ersten Controller 4 angeschlossen sind. Somit ist mittels der Anschlussmodule 16 eine Reihe gebildet, deren Anfang der erste Controller 4 bildet. Daher ist auch eine Montage des Stromverteilers 2 erleichtert. Jedes der Anschlussmodule 16 ist einem der Nebenkreise zugeordnet, die mittels der Hauptstromleitung bestromt werden.

Jedes der insgesamt zwanzig Anschlussmodule 16 ist zur Aufnahme eines Schutzschalters 18 ertüchtigt, sodass jedes der Anschlussmodule 16 mit jeweils einem Schutzschalter 18 bestückt werden kann. Insbesondere sind hierbei die Schutzschalters 18 ein Bestandteil des Stromverteilers 2, sofern diese an dem jeweiligen Anschlussmodul 16 montiert sind. Mittels der Schutzschalters 18 erfolgt eine Absicherung des jeweils zugeordneten Nebenkreises. Hierfür weist jeder Schutzschalters 18 eine geeigneten Schutzeinrichtungen auf, insbesondere einen Leistungshalbleiterschalter und/oder ein Relais. Diese werden zweckmäßigerweise mittels jeweils eines zweiten Controllers 20 gesteuert und/oder geregelt. Somit erfolgt eine Absicherung, sodass in dem jeweils zugeordneten Nebenkreise keine überhöhte Leistung, kein überhöhter elektrischer Strom oder eine überhöhte elektrische Spannung vorherrscht. Mittels weiterer, nicht näher dargestellter Kontakte erfolgt dabei ein Kontakt des Nebenkreises, der durch das jeweilige Anschlussmodule 16 geführt ist, mit dem jeweiligen Schutzschalter 18.

Der zweite Controller 20 ist signaltechnisch mit jeweils einem Busstecker 22 des jeweils zugeordneten Anschlussmoduls 16 verbunden. Sämtliche Busstecker 22 der Anschlussmodule 16 wiederum sind signaltechnisch miteinander verbunden, sodass ein gemeinsames Bussystem 24 gebildet ist. Das Bussystem 24 wiederum ist signaltechnisch mit der Busschnittstelle 12 des ersten Controllers 4 verbunden. Somit sind sämtliche Schutzschalters 18 signaltechnisch mit dem ersten Controller 4 verbunden, weswegen zwischen diesen eine Kommunikation erfolgen kann.

Ferner weist jedes Anschlussmodul 16 einen Versorgungsstecker 26 auf, der zwei Pole umfasst, und der mittels einer Stromleitung 28 mit der Stromversorgung 6 des ersten Controllers 4 elektrisch kontaktiert ist. Folglich erfolgt die Bestromung der Schutzschalters 18 mittels der Stromversorgung 6 über den jeweils zugeordneten Versorgungstecker 26.

Zudem weist jeder Schutzschalters 18 ein Schaltelement 30 in Form eines MOSFET auf, das mittels des jeweiligen zweiten Controllers 20 betätigt ist. Jedes Schaltelement 30 ist gegen das Bezugspotential 10 geführt, also gegen Masse. Auch ist jedes Schaltelement 30 gegen eine Widerstandskette 32 geführt, die insgesamt genauso viele Sockelwiderstände 34 aufweist, wie Anschlussmodule vorhanden sind. Hierbei ist jedem der Anschlussmodule 16 jeweils einer der Sockelwiderstände 34 zugeordnet, die elektrisch in Reihe geschaltet sind. Die Widerstandskette 32 ist mittels der Gleichstromquelle 8 des ersten Controllers 4 versorgt und über einen weiteren Widerstand 36 gegen das Bezugspotential 10 geführt. Somit ist die Widerstandskette 32 elektrisch in Reihe mit dem weiteren Widerstand 36 geschaltet. Der ohmsche Wert sämtliche Sockelwiderstände 34 und des weiteren Widerstand 36 ist gleich und zwar 1 kΩ.

Der zweite Controller 20 ist zudem mit weiteren Anschlusskontakten mit dem jeweils zugeordneten Anschlussmodul 16 verbunden, sodass mit diesen die über den zugeordneten Sockelwiderstand 34 abfallende elektrische Spannung erfasst werden kann. Hierfür weist der zweite Controller 20 jeweils einen geeigneten Sensor auf, und insbesondere geeignete Hardware auf. Das Schaltelement ist zwischen der dem ersten Controller 4 abgewandten Seite des zugeordneten Sockelwiderstand 34 und dem Bezugspotential 10 geschaltet. Daher ist bei Betätigung des jeweils zugeordneten Schaltelements 30 die Widerstandskette 32 auf der dem ersten Controller 4 abgewandten Seite bereits gegen das Bezugspotential 10 geführt, sodass über die nachfolgenden Sockelwiderstand 34 keine elektrische Spannung anfällt.

Der Stromverteiler 2 sowie die Schutzschalters 18 sind gemäß einem Verfahren 38 betrieben, das in Figur 2 dargestellt ist. Hierbei wird das Verfahren 2 insbesondere zu Inbetriebnahme des Stromverteilers 2 durchgeführt oder zumindest gestartet. In einem ersten Arbeitsschritt 40 wird mittels der Steuereinheit 14 sowohl die Gleichstromquelle 8 als auch die Stromversorgung 6 aktiviert und folglich auch die etwaigen Schutzschalters 18 bestromt. Bei dem ersten Controller 4 ist noch kein Wissen vorhanden, ob und wie vielen Schutzschalter 18 vorhanden sind.

In einem zweiten Arbeitsschritt 42 wird bei jedem der Schutzschalters 18 sichergestellt, dass das jeweilige Schaltelement 30 geschlossen ist. Dies wird mittels des jeweiligen zweiten Controllers 20 durchgeführt, insbesondere sobald an diesem eine elektrische Spannung anliegt. Infolgedessen wird die Widerstandskette 32 nach dem ersten bestückten Anschlussmodule 16 von dem ersten Controller 4 ausgesehen, bereits gegen das Bezugspotential 10 geführt, sodass über die nachfolgenden Sockelwiderstände 34 keine elektrische Spannung anfällt.

Es wird lediglich dann sichergestellt, dass das Schaltelement 30 geschlossen ist, wenn dem jeweiligen Schutzschalter 18 noch keine spezifische Adresse zugewiesen ist. Mit anderen Worten wird bei der ersten Bestromung überprüft, ob der jeweilige Schutzschalter 18 eine spezifische Adresse aufweist. Beispielsweise ist die spezifische Adresse in einem flüchtigen Speicher hinterlegt, der bei Beenden der Bestromung gelöscht wird. Somit ist bei der Erstbestromung noch keine spezifische Adresse zugewiesen. Falls der Speicher leer ist, wird insbesondere eine Standardadresse, wie Null, verwendet, oder der Wert der spezifischen Adresse ist beispielsweise leer. Die spezifische Adresse ist zur Kommunikation über das Bussystem 24 erforderlich. Mittels des ersten Controllers 4 wird hierbei ein Master bereitgestellt, wohingegen die Schutzschalters 18 als Slave fungieren sollen.

In einem sich anschließenden dritten Arbeitsschritt 44 wird mittels des ersten Controllers 4 eine Anfrage 46 in das Bussystem 24 eingespeist. Diese ist an sämtliche etwaigen Schutzschalters 18 gerichtet und wird folglich von sämtlichen Schutzschalters 18 und zwar deren zweiten Controllern 20 empfangen.

In einem nachfolgenden vierten Arbeitsschritt 48 wird bei jedem der Schutzschalter 18, die die Anfrage 46 empfangen haben, überprüft, ob über den jeweils zugeordneten Sockelwiderstand 34 eine elektrische Spannung abfällt. Auch wird überprüft, ob dem jeweiligen Schutzschalter 18 bereits eine (spezifische) Adresse zugewiesen wurde. Falls eine elektrische Spannung abfällt, und falls bislang keine spezifische Adresse zugewiesen wurde, wird mittels des Schutzschalters 18 eine Antwort 50 in das Bussystem 24 eingespeist, sonst hingegen nicht. Bei dem in Figur 1 dargestellten Beispiel weist keiner der Schutzschalters 18 eine spezifische Adresse auf. Daher fällt lediglich bei dem ersten Schutzschalter 18 über den Sockelwiderstand 34 eine elektrische Spannung ab, sodass lediglich von diesem die Antwort 50 in das Bussystem 24 eingespeist wird. Die Antwort 50 ist an den ersten Controller 4 gerichtet und wird von diesem empfangen.

In einem sich anschließenden fünften Arbeitsschritt 52 wird mittels des ersten Controllers 4 eine Aufforderung 54 zum Öffnen der Schaltelemente 30 in das Bussystem 24 eingespeist. Diese Aufforderung 54 ist an sämtliche zweite Controller 50 gerichtet und wird von diesen empfangen. In einem sich anschließenden sechsten Arbeitsschritt 56 wird mittels der zweiten Controller 20, die die Aufforderung 54 empfangen haben, das jeweils zugeordnete Schaltelement 30 betätigt, sodass dieses geöffnet werden. Infolgedessen fällt über jeden der Sockelwiderstand 34 jeweils eine elektrische Spannung an.

In einem sich anschließenden siebten Arbeitsschritt 58 wird mittels jedes der zweiten Controller 20 die über den jeweils zugeordneten Sockelwiderstand 34 abfallende elektrische Spannung bestimmt. Diese unterscheidet sich bei jedem der Anschlussmodule 16, und fällt insbesondere mit zunehmendem Abstand zu dem ersten Controller 4 ab. Insbesondere wird hierbei die elektrische Spannung gegenüber dem Bezugspotential 10 berücksichtigt. Anhand der elektrischen Spannung wird eine Adresse generiert. Da sich die elektrischen Spannungen, die über die jeweiligen Sockelwiderstände 40 abfallen, unterscheiden, ist die Adresse 60 jeweils unterschiedlich, und jedem Schutzschalter 18 wird eine eineindeutige Adresse 60 zugeordnet.

In einem sich anschließenden achten Arbeitsschritt 62 werden mittels des ersten Controllers 4 in das Bussystem 24 bestimmte Zeitfenster eingespeist oder zumindest diese definiert. Jedes dieser Zeitfenster korrespondiert zu einer bestimmten Adresse 60. Mittels jedes zweite Controller 20 wird in einem neunten Arbeitsschritt 64 dann, wenn das zu der zugeordneten Adresse 60 korrespondierende Zeitfenster auftritt, die Adresse 60 in das Bussystem 24 eingespeist. Somit wird dem ersten Controller 4 mitgeteilt, dass ein zu der jeweiligen Adresse 60 korrespondierender Schutzschalter 18 vorhanden ist. Aufgrund der Zeitfenster ist eine Kollision der Mitteilung der einzelnen Adressen 60 ausgeschlossen. Im Anschluss hieran ist eine im Wesentlichen ungestörte Kommunikation des ersten Controllers 4 mit den Schutzschalters 18 ermöglicht, wobei mittels des ersten Controllers 4 die Kommunikation gesteuert wird. Insbesondere erfolgt hierbei eine Zuteilung von bestimmten Zeitfenstern.

Nach Abschluss der Zuweisung der Adressen 60 wird zyklisch erneut der dritte Arbeitsschritt 44 durchgeführt und somit die Anfrage 46 das Bussystem 24 eingespeist. Der dritte Arbeitsschritt 44 wird hierbei alle 500 ms durchgeführt. Falls an den Schutzschaltern 18 nichts verändert wurde, wird mittels keinem dieser die Antwort 50 in das Bussystem 24 eingespeist. Folglich wird die Antwort 50 nicht durch den ersten Controller 4 empfangen, und es wird in einem zehnten Arbeitsschritt 66 festgestellt, dass an der Konfiguration nichts verändert wurde. Falls ein zusätzlicher Schutzschalters 18 montiert wird, wird bei diesem ebenfalls der zweite Arbeitsschritt 42 durchgeführt, sodass dann, wenn die Anfrage 46 eingespeist wird, mittels diesem eine Antwort 50 generiert wird. Sofern bei Erstinbetriebnahme des Stromverteilers 2 die Antwort 50 nicht empfangen wird, wird bereits der zehnte Arbeitsschritt 66 ausgeführt, und in dem ersten Controller 4 ist das Wissen vorhanden, dass kein Schutzschalter 18 vorhanden ist.

Zusammenfassend übertragen die Schutzschalter 18 insbesondere deren jeweilige spezifische Adresse nicht unaufgefordert. Sie arbeiten ausschließlich im Slave-Betrieb. Die Schutzschalter 18 bestimmen vorzugsweise deren spezifische Adresse auch nicht unaufgefordert. Das Bestimmen der Adresse erfolgt geeigneterweise aufgrund einer Aufforderung des ersten Controllers 4, dass die Schutzschalter 18 sich adressieren dürfen. Bevor der erste Controllers 4 diese Aufforderung jedoch über das Bussystem 24 schickt, ist es erforderlich, zu erkenne, dass mindestens ein Schutzschalter 18 vorhanden ist/hinzugefügt wurde, dem bislang keine spezifische Adresse zugewiesen wurde. Daher wird zweckmäßigerweise zyklisch die Anfrage, etwa "ist da ein neuer Schutzschalter?" gesendet. Auf diese Anfrage wird aufgrund des Verfahrens 38 genau ein bisher unadressierter Schutzschalter 18 antworten, also ein Schutzschalter, der bislang keine spezifische Adresse aufweist. Nach Empfang der Antwort 50 wird von dem ersten Controller 4 zweckmäßigerweise sicherstellt, dass die Gleichstromquelle 8, die für die Adressierung benötigt wird, in einem stabilen Zustand ist. Wenn das sichergestellt ist, fordert der erste Controller 4 zweckmäßigerweise die Schutzschalter 18 auf, ihre (spezifische) Adresse zu bestimmen.

### Bezugszeichenliste

- 2: Stromverteiler
- 4: erster Controller
- 6: Stromversorgung
- 8: Gleichstromquelle
- 10: Bezugspotential
- 12: Busschnittstelle
- 14: Steuereinheit
- 16: Anschlussmodul
- 18: Schutzschalter
- 20: zweiter Controller
- 22: Busstecker
- 24: Bussystem
- 26: Versorgungsstecker
- 28: Stromleitung
- 30: Schaltelement
- 32: Widerstandskette
- 34: Sockelwiderstand
- 36: weiterer Widerstand
- 38: Verfahren
- 40: erster Arbeitsschritt
- 42: zweiter Arbeitsschritt
- 44: dritter Arbeitsschritt
- 46: Anfrage
- 48: vierter Arbeitsschritt
- 50: Antwort
- 52: fünfter Arbeitsschritt
- 54: Aufforderung
- 56: sechster Arbeitsschritt
- 58: siebter Arbeitsschritt
- 60: Adresse
- 62: achter Arbeitsschritt
- 64: neunter Arbeitsschritt
- 66: zehnter Arbeitsschritt

## Patentansprüche

1. Verfahren (38) zum Betrieb eines Stromverteilers (2) mit einem ersten Controller (4) und mit einer Anzahl von daran angeschlossenen Anschlussmodulen (16), die jeweils einen Sockelwiderstand (34) aufweisen, die eine in Reihe geschaltete Widerstandskette (32) bilden, die mittels einer Gleichstromquelle (8) des ersten Controllers (4) versorgt und gegen ein Bezugspotential (10) geführt ist, wobei jedes Anschlussmodul (16) einen Versorgungsstecker (26) und einen Busstecker (22) eines gemeinsamen Bussystems (24) aufweist, das signaltechnisch mit dem ersten Controller (4) verbunden ist, wobei die Anschlussmodule (16) mit einem Schutzschalter (18) bestückt oder bestückbar sind, die jeweils einen zweiten Controller (20) zur Erfassung der an dem zugeordneten Sockelwiderstand (34) abfallenden elektrischen Spannung aufweisen, und die einen mittels des jeweiligen zweiten Controllers (20) betätigtes Schaltelement (30) aufweisen, das zwischen der dem ersten Controller (4) abgewandten Seite des zugeordneten Sockelwiderstands (34) und dem Bezugspotential (10) geschaltet ist, und die signaltechnisch mit dem zugeordneten Busstecker (22) verbunden und mittels Versorgungsstecker (26) bestromt ist, bei welchem
- sichergestellt wird, dass das Schaltelement (30) jedes Schutzschalters (18) geschlossen ist, wenn dem Schutzschalter (18) keine spezifische Adresse zugewiesen ist,
- mittels des ersten Controllers (4) eine Anfrage (46) in das Bussystem (24) eingespeist wird, und
- mittels des zweiten Controllers (20) eine Antwort (50) in das Bussystem (24) eingespeist wird, falls über den zugeordneten Sockelwiderstand (34) eine elektrische Spannung abfällt.

2. Verfahren (38) nach Anspruch 1,
**dadurch gekennzeichnet,**
**dass** im Anschluss an das Einspeisen der Antwort (50) das Schaltelement (30) geöffnet wird.

3. Verfahren (38) nach Anspruch 2,
**dadurch gekennzeichnet,**
**dass** mittels des ersten Controllers (4) eine Aufforderung (54) zum Öffnen der Schaltelemete (30) in das Bussystem (24) eingespeist wird.

4. Verfahren (38) nach Anspruch 2 oder 3,
**dadurch gekennzeichnet,**
**dass** nach dem Öffnen des Schaltelements (30) die Adresse (60) des jeweiligen Schutzschalters (18) in Abhängigkeit der über den zugeordneten Sockelwiderstand (34) abfallenden elektrischen Spannung erstellt wird.

5. Verfahren (38) nach Anspruch 4,
**dadurch gekennzeichnet,**
**dass** die Adresse (60) jedes Schutzschalters (18) in das Bussystem (24) eingespeist wird.

6. Verfahren (38) nach einem der Ansprüche 1 bis 5,
**dadurch gekennzeichnet,**
**dass** das Einspeisen der Anfrage (46) mittels des ersten Controllers (4) zyklisch widerholt wird.

7. Schutzschalter (18), der zur Bestückung eines Stromverteiler (1) mit einem ersten Controller (4) und mit einer Anzahl von daran angeschlossenen Anschlussmodulen (16), die jeweils einen Sockelwiderstand (34) aufweisen, die eine in Reihe geschaltete Widerstandskette (32) bilden, die mittels einer Gleichstromquelle (8) des ersten Controllers (4) versorgt und gegen ein Bezugspotential (10) geführt ist, wobei jedes Anschlussmodul (16) einen Versorgungsstecker (26) und einen Busstecker (22) eines gemeinsamen Bussystems (24) aufweist, das signaltechnisch mit dem ersten Controller (4) verbunden ist, vorgesehen ist, und der einen zweiten Controller (20) zur Erfassung der an dem zugeordneten Sockelwiderstand (34) abfallenden elektrischen Spannung aufweist, und der ein mittels des zweiten Controllers (20) betätigtes Schaltelement (30) umfasst, das zwischen der dem ersten Controller (4) abgewandten Seite des zugeordneten Sockelwiderstands (34) und dem Bezugspotential (10) schaltbar ist, und der signaltechnisch mit dem zugeordneten Busstecker (22) verbindbar und mittels Versorgungsstecker (26) bestrombar ist,
**dadurch gekennzeichnet,**
**dass** der zweite Controller (20) zur Durchführung eines Verfahrens (38) nach einem der Ansprüche 1 bis 6 eingerichtet ist.

8. Stromverteiler (2) mit einem ersten Controller (4) und mit einer Anzahl von daran angeschlossenen Anschlussmodulen (16), die jeweils einen Sockelwiderstand (34) aufweisen, die eine in Reihe geschaltete Widerstandskette (32) bilden, die mittels einer Gleichstromquelle (8) des ersten Controllers (4) versorgt und gegen ein Bezugspotential (10) geführt ist, wobei jedes Anschlussmodul (16) einen Versorgungsstecker (26) und einen Busstecker (22) eines gemeinsamen Bussystems (24) aufweist, das signaltechnisch mit dem ersten Controller (4) verbunden ist, wobei die Anschlussmodule (16) mit jeweils einem Schutzschalter (18) nach Anspruch 7 bestückt oder bestückbar sind, wobei der erste Controller (4) zur Durchführung eines Verfahrens (38) nach einem der Ansprüche 1 bis 6 eingerichtet ist.

## Claims

1. Method (38) for operating a power distributor (2) comprising a first controller (4) and comprising a number of connection modules (16) connected thereto, which each have a base resistor (34) that form a series-connected resistor chain (32) that is supplied with power by means of a DC current source (8) of the first controller (4) and is connected to a reference potential (10), wherein each connection module (16) has a supply plug (26) and a bus plug (22) of a common bus system (24) that is connected, for the transfer of signals, to the first controller (4), wherein the connection modules (16) are equipped, or able to be equipped, with a circuit breaker (18), which circuit breakers each have a second controller (20) for capturing the voltage dropped across the associated base resistor (34), and have a switching element (30) that is actuated by means of the respective second controller (20) and is connected between the side of the associated base resistor (34) that is averted from the first controller (4) and the reference potential (10), and said circuit breaker is connected, for the transfer of signals, to the associated bus plug (22) and is energized by means of supply plugs (26), in which method
- it is ensured that the switching element (30) of each circuit breaker (18) is closed if there is no specific address allocated to the circuit breaker (18),
- a request (46) is fed into the bus system (24) by means of the first controller (4), and
- a response (50) is fed into the bus system (24) by means of the second controller (20) if a voltage is dropped across the associated base resistor (34).

2. Method (38) according to Claim 1,
**characterized**
**in that** the switching element (30) is opened after the response (50) is fed in.

3. Method (38) according to Claim 2,
**characterized**
**in that** a request (54) to open the switching elements (30) is fed into the bus system (24) by means of the first controller (4).

4. Method (38) according to Claim 2 or 3, **characterized**
**in that**, after the switching element (30) has opened, the address (60) of the respective circuit breaker (18) is created depending on the voltage dropped across the associated base resistor (34).

5. Method (38) according to Claim 4,
**characterized**
**in that** the address (60) of each circuit breaker (18) is fed into the bus system (24).

6. Method (38) according to one of Claims 1 to 5, **characterized**
**in that** the feeding-in of the request (46) by means of the first controller (4) is repeated cyclically.

7. Circuit breaker (18) that is provided to equip a power distributor (1) comprising a first controller (4) and comprising a number of connection modules (16) connected thereto, which each have a base resistor (34) that form a series-connected resistor chain (32) that is supplied with power by means of a DC current source (8) of the first controller (4) and is connected to a reference potential (10), wherein each connection module (16) has a supply plug (26) and a bus plug (22) of a common bus system (24) that is connected, for the transfer of signals, to the first controller (4), and said circuit breaker has a second controller (20) for capturing the voltage dropped across the associated base resistor (34), and comprises a switching element (30) that is actuated by means of the second controller (20) and is able to be connected between the side of the associated base resistor (34) that is averted from the first controller (4) and the reference potential (10), and said circuit breaker is able to be connected, for the transfer of signals, to the associated bus plug (22) and is able to be energized by means of supply plugs (26), **characterized**
**in that** the second controller (20) is configured to carry out a method (38) according to one of Claims 1 to 6.

8. Power distributor (2) comprising a first controller (4) and comprising a number of connection modules (16) connected thereto, which each have a base resistor (34) that form a series-connected resistor chain (32) that is supplied with power by means of a DC current source (8) of the first controller (4) and is connected to a reference potential (10), wherein each connection module (16) has a supply plug (26) and a bus plug (22) of a common bus system (24) that is connected, for the transfer of signals, to the first controller (4), wherein the connection modules (16) are each equipped, or able to be equipped, with a circuit breaker (18) according to Claim 7, wherein the first controller (4) is configured to carry out a method (38) according to one of Claims 1 to 6.

## Revendications

1. Procédé (38) permettant de faire fonctionner un distributeur de courant (2) comprenant un premier contrôleur (4) et un certain nombre de modules de connexion (16) connectés à celui-ci et qui présentent respectivement une résistance de base (34) formant une chaîne de résistances (32) montées en série, qui est alimentée au moyen d'une source de courant continu (8) du premier contrôleur (4) et est amenée à un potentiel de référence (10), dans lequel chaque module de connexion (16) présente une fiche d'alimentation (26) et une fiche de bus (22) d'un système de bus commun (24) qui est relié en technique de signalisation au premier contrôleur (4), dans lequel les modules de connexion (16) sont ou peuvent être équipés d'un disjoncteur de protection (18) qui présente respectivement un deuxième contrôleur (20) pour détecter la tension électrique chutant à la résistance de base (34) associée, et qui présente un élément de commutation (30) actionné au moyen du deuxième contrôleur (20) respectif, qui est monté entre le côté, détourné du premier contrôleur (4), de la résistance de base (34) associée et le potentiel de référence (10), et qui est relié en technique de signalisation à la fiche de bus (22) associée et est alimenté en courant au moyen de fiches d'alimentation (26), dans lequel
- on veille à ce que l'élément de commutation (30) de chaque disjoncteur de protection (18) est fermé si aucune adresse spécifique n'est attribuée au disjoncteur de protection (18),
- une demande (46) est injectée dans le système de bus (24) au moyen du premier contrôleur (4), et
- une réponse (50) est injectée dans le système de bus (24) au moyen du deuxième contrôleur (20) si une tension électrique chute aux bornes de la résistance de base (34) associée.

2. Procédé (38) selon la revendication 1, **caractérisé en ce que** l'élément de commutation (30) est ouvert suite à l'injection de la réponse (50).

3. Procédé (38) selon la revendication 2, **caractérisé en ce qu'**une invitation (54) à ouvrir les éléments de commutation (30) est injectée dans le système de bus (24) au moyen du premier contrôleur (4).

4. Procédé (38) selon la revendication 2 ou 3, **caractérisé en ce qu'**après l'ouverture de l'élément de commutation (30), l'adresse (60) du disjoncteur de protection (18) respectif est créée en fonction de la tension électrique chutant aux bornes de la résistance de base (34) associée.

5. Procédé (38) selon la revendication 4, **caractérisé en ce que** l'adresse (60) de chaque disjoncteur de protection (18) est injectée dans le système de bus (24) .

6. Procédé (38) selon l'une quelconque des revendications 1 à 5, **caractérisé en ce que** l'injection de la demande (46) au moyen du premier contrôleur (4) est répétée de manière cyclique.

7. Disjoncteur de protection (18) qui est prévu pour équiper un distributeur de courant (1) comprenant un premier contrôleur (4) et un certain nombre de modules de connexion (16) connectés à celui-ci, qui présentent respectivement une résistance de base (34) qui constituent une chaîne de résistances (32) montées en série, qui est alimentée au moyen d'une source de courant continu (8) du premier contrôleur (4) et est amenée à un potentiel de référence (10), dans lequel chaque module de connexion (16) présente une fiche d'alimentation (26) et une fiche de bus (22) d'un système de bus commun (24) qui est relié en technique de signalisation au premier contrôleur (4), et qui présente un deuxième contrôleur (20) pour détecter la tension électrique chutant à la résistance de base (34) associée, et qui comprend un élément de commutation (30) actionné au moyen du deuxième contrôleur (20) et qui peut être monté entre le côté, détourné du premier contrôleur (4), de la résistance de base (34) associée et le potentiel de référence (10), et qui peut être relié en technique de signalisation à la fiche de bus (22) associée et peut être alimenté en courant au moyen de fiches d'alimentation (26),
**caractérisé en ce que** le deuxième contrôleur (20) est conçu pour exécuter un procédé (38) selon l'une quelconque des revendications 1 à 6.

8. Distributeur de courant (2), comprenant un premier contrôleur (4) et un certain nombre de modules de connexion (16) connectés à celui-ci qui présentent respectivement une résistance de base (34) formant une chaîne de résistances (32) montées en série qui est alimentée au moyen d'une source de courant continu (8) du premier contrôleur (4) et est amenée à un potentiel de référence (10), dans lequel chaque module de connexion (16) présente une fiche d'alimentation (26) et une fiche de bus (22) d'un système de bus commun (24) qui est relié en technique de signalisation au premier contrôleur (4), dans lequel les modules de connexion (16) sont ou peuvent être équipés respectivement avec un disjoncteur de protection (18) selon la revendication 7, dans lequel le premier contrôleur (4) est conçu pour exécuter un procédé (38) selon l'une quelconque des revendications 1 à 6.
